# FASCICULE DE BREVET EUROPEEN

(11) **EP 4 073 356 B1**
(45) Date de publication et mention de la délivrance du brevet: **20.11.2024**
(21) Numéro de dépôt: 20842017.4
(22) Date de dépôt: 08.12.2020
(51) Int. Cl.: F01D 25/18, F02C 3/067, F02C 7/06, F02C 7/36, F02K 3/06

(54) **TURBOMACHINE À TURBINE CONTRAROTATIVE POUR UN AÉRONEF**
TURBOMASCHINE FÜR EIN FLUGZEUG, DIE EINE GEGENLÄUFIGE TURBINE AUFWEIST
TURBOMACHINE HAVING A CONTRAROTATING TURBINE FOR AN AIRCRAFT

(30) Priorité: 10.12.2019 FR 1914022
(43) Date de publication de la demande: 19.10.2022
(73) Titulaire: SAFRAN AIRCRAFT ENGINES, 75015 Paris (FR); Safran Transmission Systems, 92700 Colombes (FR)
(72) Inventeur: LEVISSE, Paul Ghislain Albert, 77550 Moissy-cramayel (FR); BELMONTE, Olivier, 77550 Moissy-cramayel (FR); TRUCO, Romain, 77550 Moissy-cramayel (FR); FORMICA, Olivier, 77550 Moissy-cramayel (FR); CHEVILLOT, Fabrice Joël Luc, 77550 Moissy-cramayel (FR); NIEPCERON, Clément Paul René, 77550 Moissy-cramayel (FR)
(74) Mandataire: Gevers & Orès
(86) Numéro de dépôt international: PCT/FR2020/052348
(87) Numéro de publication internationale: WO 2021/116600

(56) Documents cités:
- EP-A1- 2 975 213
- EP-A1- 3 447 243
- WO-A1-2013/147977
- US-A1- 2019 085 701

## Description

### Domaine technique de l'invention

La présente invention concerne une turbomachine à turbine contrarotative pour un aéronef.

### Arrière-plan technique

L'état de la technique comprend notamment les documents US-A1-2019/085701, EP-A1-3 447 243, EP-A1-2 975 213 et WO-A1-2013/147977. De manière classique, une turbomachine d'aéronef comprend d'amont en aval, dans le sens d'écoulement des gaz, une soufflante, un compresseur basse pression, un compresseur haute pression, une chambre annulaire de combustion, une turbine haute pression et une turbine basse pression. Le rotor du compresseur basse pression est entraîné par le rotor de la turbine basse pression, et le rotor du compresseur haute pression est entraîné par le rotor de la turbine haute pression.

D'un point de vue performance moteur et consommation, il est avantageux de maximiser la vitesse de rotation de la turbine basse pression car cela permet d'obtenir un meilleur rendement de la turbine. Cependant, augmenter la vitesse de rotation de la turbine implique d'augmenter les efforts centrifuges qu'elle subit, et complique donc fortement sa conception.

Une suggestion pour augmenter le rendement d'une turbine sans pour autant augmenter sa vitesse de rotation consiste à utiliser une turbine contrarotative. La turbine basse pression est alors remplacée par une turbine à deux rotors dont un premier rotor est configuré pour tourner dans un premier sens de rotation et est relié à un premier arbre de turbine, et un second rotor est configuré pour tourner dans un sens opposé de rotation et est relié à un second arbre de turbine. Le premier rotor comporte des roues de turbine intercalées entre des roues de turbine du second rotor.

Une turbine basse pression peut avoir une vitesse de rotation au décollage de l'ordre de 4.000 tours par minute dans une architecture classique où la turbine entraine directement la soufflante ou une vitesse de rotation au décollage de l'ordre de10.000 tours par minute dans une architecture où la turbine entraine la soufflante par l'intermédiaire d'un réducteur. Son remplacement par une turbine contrarotative dont les rotors tournent respectivement à des vitesses au décollage de l'ordre de 3.000 et 7.000 tours par minute permet d'avoir une vitesse relative de 10.000 tours par minute (3000+7000) tout en ayant une vitesse absolue dans une tranche basse de l'intervalle de vitesse précité.

Cette turbine contrarotative comprend ainsi un rotor lent et un rotor rapide, le rotor lent entraînant la soufflante et le rotor rapide engrenant avec un réducteur mécanique à train épicycloïdal de type planétaire dont l'entrée et la sortie sont contrarotatives (couronne tournante, porte-satellites fixe, solaire tournant).

Le réducteur couple le rotor rapide et le rotor lent, permettant ainsi un transfert de puissance du rotor rapide vers le rotor lent. On profite des rendements supérieurs d'une turbine rapide tout en transférant une large part de la puissance de la turbine vers la soufflante sans transiter par un réducteur mais par un arbre.

Cette architecture est complexe de par son intégration mécanique : le réducteur mécanique est situé à l'aval de la turbomachine, radialement à l'intérieur d'un carter de stator appelé carter d'échappement.

Les solutions d'intégration existantes sont particulièrement complexes car il y a de nombreux paliers inter-arbres particulièrement difficiles à lubrifier. Les charges radiales des turbines sont susceptibles de transiter dans le réducteur qui effectue le maintien radial des deux arbres, ce qui est extrêmement pénalisant pour le bon comportement du réducteur. Enfin, l'encombrement n'est pas optimisé, notamment avec la présence de paliers sous le planétaire ou solaire du réducteur, qui limite l'intégration radiale du réducteur.

### Résumé de l'invention

La présente invention propose un perfectionnement à la technologie décrite ci-dessus, qui représente une solution simple, efficace et économique à au moins une partie des problèmes évoqués ci-dessus.

L'invention propose une turbomachine à turbine contrarotative pour un aéronef,
la turbomachine comportant une turbine contrarotative dont un premier rotor est configuré pour tourner dans un premier sens de rotation et est relié à un premier arbre de turbine, et un second rotor est configuré pour tourner dans un sens opposé de rotation et est relié à un second arbre de turbine, le premier rotor comportant des roues de turbine intercalées entre des roues de turbine du second rotor,
la turbomachine comprenant en outre un réducteur mécanique à train épicycloïdal de type planétaire qui comporte un solaire entraîné en rotation par ledit second arbre, une couronne entraînée en rotation par ledit premier arbre, et un porte-satellites fixé à un premier carter de stator de la turbomachine situé en amont de la turbine contrarotative par rapport à une direction d'écoulement des gaz dans la turbomachine,
la turbomachine comprenant des paliers de guidage des premier et second arbres,
caractérisée en ce que ledit premier arbre est guidé par au moins deux paliers de guidage montés entre ce premier arbre et un second carter de stator situé en aval de la turbine contrarotative ou un élément relié à ce dernier, et ledit second arbre est guidé par au moins deux paliers de guidage monté entre ce second arbre et ledit premier carter de stator ou un élément relié à ce dernier.

Chacun des deux rotors de la turbine libre est ainsi guidé en rotation par deux paliers contre un seul palier dans certaines architectures de la technique antérieure.

Cette solution est avantageuse notamment pour les raisons suivantes :
- la turbomachine est plus facile à assembler du fait du centrage assuré lors du montage par les paires de paliers, pour chacun des premier et second arbres,
- le réducteur est mieux maintenu sous gravitaire et manoeuvre car il peut être encadré par des paliers portés par des chemins d'effort rigides.

La turbomachine selon l'invention peut comprendre une ou plusieurs des caractéristiques ci-dessous, prises isolément les unes des autres ou en combinaison les unes avec les autres :
- ledit second arbre est guidé par seulement deux paliers de guidage ;
- les deux paliers de guidage du second arbre sont respectivement un palier à billes amont et un palier à rouleaux aval ;
- l'un des deux paliers de guidage du second arbre, tel que le palier à rouleaux aval, est associé à un système d'amortissement à compression de film d'huile ;
- les deux paliers de guidage du second arbre sont situés radialement à l'intérieur des premiers et seconds rotors ; ceci est avantageux dans la mesure ou cela permet d'éviter un porte-à-faux générant des consommations de jeux sous manoeuvre importantes, et d'autre part de mieux gérer la dynamique de la turbine (absence de mode de flexion de l'arbre de cette turbine dans la plage de fonctionnement, meilleure possibilité d'amortissement des modes de suspension de cette turbine); par ailleurs, dans le cas où ces paliers seraient disposés respectivement au droit des étages amont et aval de la turbine, les paliers assureraient un meilleur maintien de celle-ci ;
- ledit premier arbre est guidé par seulement deux paliers de guidage ;
- un premier palier de guidage du premier arbre est situé en amont du réducteur et un second palier de guidage du premier arbre est situé en aval du réducteur ;
- le premier palier de guidage du premier arbre est situé dans un premier plan perpendiculaire à un axe longitudinal de la turbomachine, qui passe en aval desdits premier et second rotors, et en amont dudit réducteur et dudit second carter, et ledit second palier de guidage du premier arbre est situé dans un second plan perpendiculaire à cet axe, qui est situé en aval dudit réducteur et dudit second carter ;
- les deux paliers de guidage du premier arbre sont à rouleaux ;
- l'un des deux paliers de guidage du premier arbre, tel qu'un palier amont, est associé à un système d'amortissement à compression de film d'huile ;
- ledit premier arbre est relié à un étage aval dudit premier rotor, et/ou ledit second arbre est relié à un étage aval dudit second rotor ; ceci permet de faire passer le ou les couples de rotation par le dernier étage de rotor, qui est beaucoup plus froid que le premier étage ou étage amont,
- au moins un des paliers de guidage du premier arbre est conformé pour avoir une certaine souplesse en direction radiale ; cette souplesse peut être apportée par une portion annulaire à section en C d'une bague de ce palier,
- au moins un des paliers de guidage du second arbre est conformé pour avoir une certaine souplesse en direction radiale ; cette souplesse peut être apportée par une portion annulaire à section en C d'une bague de ce palier,
- au moins un des éléments choisis parmi le porte-couronne et le porte-satellites est conformé pour avoir une certaine souplesse radiale ainsi qu'une certaine souplesse en basculement (souplesse en rotation autour des axes perpendiculaires à l'axe moteur) ; cette souplesse peut être apportée par une portion annulaire à section en C ou en S du porte-couronne ou du porte-satellites (si intégrée au porte-couronne), cette souplesse doit de préférence être intégrée en dehors du chemin d'effort allant de l'extrémité aval du porte-couronne jusqu'au palier,
- ledit premier arbre est relié à la couronne du réducteur et à un arbre d'entraînement d'une soufflante de la turbomachine,
- l'un des paliers de guidage du premier arbre est situé sur une circonférence qui a un diamètre supérieur à une circonférence passant par l'autre des paliers de guidage de ce premier arbre, et qui est de préférence supérieur au diamètre externe du réducteur, et
- les paliers de guidage du second arbre sont situés sur des circonférences de diamètres différentes, le palier situé en aval étant situé sur la circonférence de plus petit diamètre qui peut être inférieur au diamètre interne du réducteur.

De manière avantageuse, un système d'amortissement à compression de film d'huile permet d'amortir des modes dynamiques sous balourd d'un arbre ou rotor.

Préférentiellement, la turbomachine est du type à une unique soufflante carénée, le premier arbre entrainant en rotation cette unique soufflante.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig.1] la figure 1 est une vue très schématique d'une turbomachine à turbine contrarotative selon un mode de réalisation de l'invention,
[Fig.2] la figure 2 est une plus à plus grande échelle de la turbine contrarotative de la figure 1,
[Fig.3] la figure 3 est une vue schématique en coupe axiale d'un palier de guidage d'un arbre de la turbomachine de la figure 1,
[Fig.4] la figure 4 est une vue schématique en coupe axiale d'un autre palier de guidage d'un arbre de la turbomachine de la figure 1, et
[Fig.5] la figure 5 est une vue schématique en coupe axiale d'autres paliers de guidage d'un arbre de la turbomachine de la figure 1.

### Description détaillée de l'invention

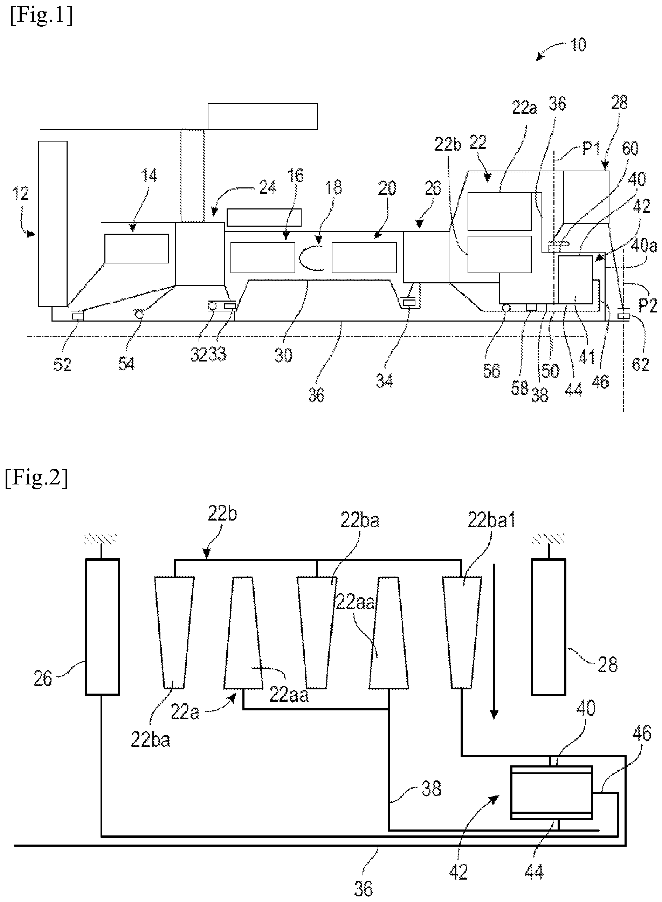

La figure 1 représente de manière très schématique une turbomachine 10 à turbine contrarotative pour un aéronef.

Cette turbomachine 10 comprend d'amont en aval, dans le sens d'écoulement des gaz, une soufflante 12, un compresseur basse pression 14, un compresseur haute pression 16, une chambre annulaire de combustion 18, une turbine haute pression 20 et une turbine contrarotative 22.

La référence 24 désigne un carter intermédiaire situé entre les compresseurs 14 et 16, et la référence 26 désigne un carter de turbine (du type TVF, acronyme de l'anglais *Turbine Vane Frame* qui désigne un carter de turbine équipé de bras formant des aubages de redresseur) situé entre les turbines 20 et 22. Enfin, la référence 28 désigne un carter d'échappement (du type TRF, acronyme de l'anglais *Turbine Rear Frame* qui désigne le dernier carter de turbine). Ces carters forment la structure de la turbomachine : ils supportent les paliers qui guident les arbres en rotation et sont liés aux suspensions de la turbomachine.

Le rotor de la turbine haute pression 20 entraîne en rotation le rotor du compresseur haute pression 16 par un arbre haute pression 30 qui est centré et guidé en rotation par des paliers, tels qu'un palier amont 32 à billes et un palier aval 34 à rouleaux. Le palier 32 est monté entre une extrémité amont de l'arbre 30 et le carter intermédiaire 24, et le palier 34 est monté entre une extrémité aval de l'arbre 30 et le carter de turbine 26.

La turbine contrarotative 22 comprend un premier rotor 22a dont des roues 22aa sont configurées pour tourner dans un premier sens de rotation et sont reliées à un premier arbre de turbine 36, et un second rotor 22b dont des roues 22ba sont configurées pour tourner dans un sens opposé de rotation et sont reliées à un second arbre de turbine 38 et sont intercalées entre les roues 22aa du rotor 22a (cf. figure 2).

Chaque roue de turbine comprend une rangée annulaire de pales qui comportent chacune un profil aérodynamique comportant un intrados et un extrados qui se rejoignent pour former un bord d'attaque et un bord de fuite des gaz dans la veine de turbine.

Le premier arbre 36 entraine en rotation la soufflante 12 ainsi que le rotor du compresseur basse pression 14. Ce premier arbre 36 est en outre engrené avec une couronne 40 d'un réducteur mécanique 42 à train épicycloïdal de type planétaire.

Le second arbre 38 est engrené avec le solaire 44 ou planétaire du réducteur 42.

Le réducteur 42 comprend en outre des satellites 41 engrenés respectivement avec le solaire 44 et la couronne 40 et portés par un porte-satellites 46 qui est fixé au carter de turbine 26.

Chacun des carters 26 et 28 comprend en général un moyeu central, ainsi qu'un anneau extérieur qui entoure le moyeu et qui est relié à celui-ci par une série de bras sensiblement radiaux par rapport à l'axe longitudinal de la turbomachine. Le moyeu central du carter 28 s'étend autour d'au moins une partie du réducteur 42.

Dans l'exemple représenté, l'arbre haute pression 30 est centré et guidé en rotation par deux paliers amont, respectivement à billes 32 et à rouleaux 33, et par un palier aval 34 à rouleaux. Les paliers 32, 33 sont montés entre une extrémité amont de l'arbre 30 et le carter intermédiaire 24, et le palier 34 est monté entre une extrémité aval de l'arbre 30 et le carter de turbine 26.

Le porte-satellites 46 du réducteur 42 est fixé au carter de turbine 26. Le porte-satellites 46 est ainsi relié au carter de turbine 26 par une paroi cylindrique 50 qui est avantageusement rigide. Cette paroi 50 traverse axialement les rotors 22a, 22b ainsi que le second arbre 38.

Le second arbre 38 a son extrémité aval engrenée avec le solaire, comme évoqué dans ce qui précède, et est en outre relié au dernier étage ou étage aval du second rotor 22b, c'est-à-dire à la dernière roue 22ba1 de ce rotor.

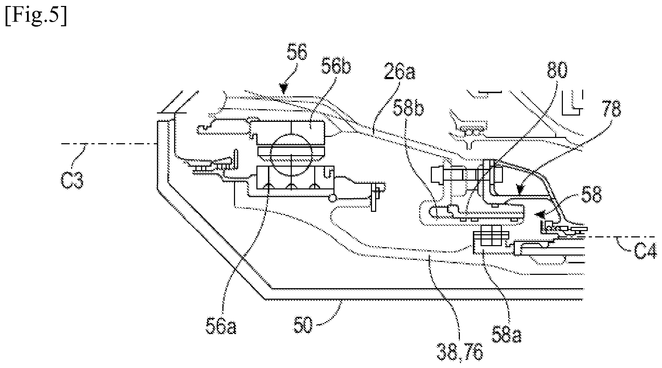

Le second arbre 38 est centré et guidé en rotation sur cette paroi 50 par l'intermédiaire de deux paliers de guidage, respectivement amont 56 et aval 58. Un exemple de réalisation de ces paliers 56, 58 sera décrit plus en détail dans ce qui suit en référence à la figure 5.

Le premier arbre 36 a son extrémité aval fixée à la couronne 40 du réducteur et son extrémité amont qui est fixée au dernier étage ou étage aval du premier rotor 22a, c'est-à-dire à la dernière roue de ce rotor. La couronne 40 est par ailleurs fixée à l'extrémité amont d'un porte-couronne 40a dont l'extrémité aval est fixée ou engrenée avec l'extrémité aval de l'arbre 36.

Le porte-satellites 46 peut comprendre, ici du côté aval du réducteur 42, une portion annulaire ayant une section en forme de C ou S de façon à conférer au porte-satellites une certaine souplesse par déformation élastique, en particulier en direction radiale ainsi qu'en basculement (souplesse en rotation autour des axes perpendiculaires à l'axe moteur). Du fait de cette souplesse apportée par le porte-satellites 46, le porte-couronne 40a du réducteur 42 peut être lui rigide. L'inverse est envisageable, sous certaines conditions. Dans ce cas, le porte-couronne 40a serait souple ou conférerait une souplesse, et le porte-satellites 46 serait rigide. Le porte-couronne 40a comprendrait alors une portion annulaire ayant une section en forme de C ou S de façon à conférer à la couronne une certaine souplesse par déformation élastique, en particulier en radial ainsi qu'en basculement (souplesse en rotation autour des axes perpendiculaires à l'axe moteur). Dans cette deuxième configuration, avantageusement on intègre la souplesse hors du chemin d'effort allant de l'extrémité aval du porte-couronne 40a jusqu'au palier 60.

L'arbre 36 est guidé à l'amont par des paliers 52, 54 montés entre cet arbre et le carter intermédiaire 24. Un premier de ces paliers est par exemple un palier amont à rouleaux 52, et un second de ces paliers est par exemple un palier aval à billes 54.

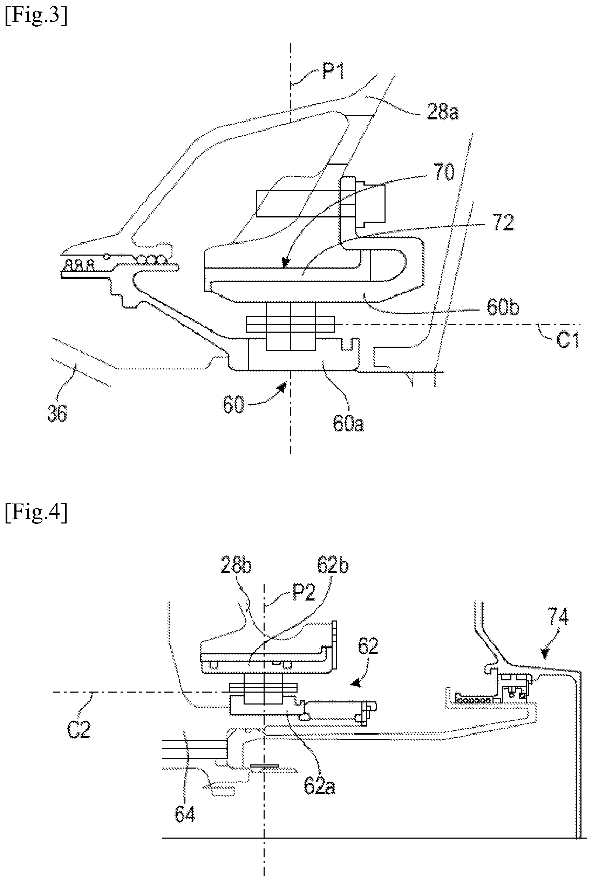

L'arbre 36 est en outre centré et guidé en rotation à l'aval par deux paliers de guidage, respectivement amont 60 et aval 62. Ces paliers sont avantageusement placés de part et d'autre du réducteur 42. Un exemple de réalisation de ces paliers 60, 62 est décrit plus en détail dans ce qui suit en référence aux figures 3 et 4.

La figure 3 illustre un exemple de réalisation plus détaillé du palier de guidage 60, par exemple à rouleaux. Ce palier 60 est de préférence situé en amont du réducteur 42. Il peut être plus exactement situé dans un plan P1, perpendiculaire à l'axe de la turbomachine, qui est situé en aval de la turbine 22, et en amont du réducteur 42 ainsi que du carter d'échappement 28 (cf. également figure 1).

Le palier 60 comprend une bague interne 60a solidaire de l'arbre 36, et une bague externe 60b solidaire d'une virole 28a fixée au carter 28. Cette virole 28a a avantageusement une forme générale tronconique évasée vers l'aval. Cette virole 28a forme un support du palier 60.

Le palier 60 est avantageusement associé à un système d'amortissement 70 à compression de film d'huile. Dans l'exemple représenté, ce système 70 est présent au niveau de la bague externe du palier, entre cette bague 60b et l'extrémité radialement interne de la virole 28a. Un film d'huile est formé dans un espace annulaire s'étendant entre une surface cylindrique externe de la bague 60b et une surface cylindrique interne d'un anneau 72 monté autour de la bague, cet espace étant alimenté en huile par des moyens appropriés. La bague externe 60b est en outre conformée pour conférer une certaine souplesse au palier 60. Dans l'exemple représenté, une de ses extrémités axiales, ici aval, a en section axiale une forme en C ou épingle qui autorise par déformation une souplesse radiale de la bague 60b.

La figure 4 illustre un exemple de réalisation plus détaillé du palier de guidage 62, par exemple à rouleaux. Ce palier 62 est de préférence situé en aval du réducteur 42. Il peut être plus exactement situé dans un plan P2, perpendiculaire à l'axe de la turbomachine, qui est situé en aval du réducteur 42 ainsi que du carter d'échappement 28 (cf. figure 1).

Le palier 62 comprend une bague interne 62a solidaire de l'extrémité aval de l'arbre 64, et une bague externe 62b solidaire d'une virole 28b fixée au carter 28. Cette virole 28b a avantageusement une forme générale tronconique évasée vers l'amont. Cette virole 28b forme un support du palier 62.

Le palier 62 participe au guidage de l'arbre 64, comme évoqué dans ce qui précède, mais aussi de l'arbre 36 du fait de la liaison de cet arbre 36 à l'arbre 64, par l'intermédiaire du porte-couronne 40a notamment.

La virole 28b ou un prolongement axial aval de la virole 28b peut coopérer avec un joint 74 d'étanchéité dynamique porté par l'arbre 64 ou un élément rapporté à l'extrémité aval de cet arbre.

Le palier 60 est situé sur une circonférence C1 qui a un diamètre supérieur à la circonférence C2 où est situé le palier 62.

La figure 5 illustre un exemple de réalisation plus détaillé des paliers de guidage 56, 58. Le palier amont 56 est à billes et le palier aval 58 est à rouleaux. Ces paliers sont de préférence situés en amont du réducteur 42, et radialement à l'intérieur de la turbine 22. Le palier amont 56 peut être situé au droit de l'extrémité amont ou de l'étage amont de la turbine 22, et le palier aval 58 peut être situé au droit de l'extrémité aval ou de l'étage aval de la turbine 22.

Chacun des paliers 56, 58 comprend une bague interne 56a, 58a solidaire d'une paroi annulaire 76 fixée à l'arbre 38, et une bague externe 56b, 58b solidaire d'une virole 26a fixée au carter 26. Cette virole 26a a avantageusement une forme générale tronconique évasée vers l'amont. Cette virole 26a forme un support des paliers 56, 58.

Le palier 58 est avantageusement associé à un système d'amortissement 78 à compression de film d'huile. Dans l'exemple représenté, ce système 78 est présent au niveau de la bague externe 58b du palier 58, entre cette bague 58b et l'extrémité radialement interne de la virole 26a. Un film d'huile est formé dans un espace annulaire s'étendant entre une surface cylindrique externe de la bague 58b et une surface cylindrique interne d'un anneau 80 monté autour de la bague 58b, cet espace étant alimenté en huile par des moyens appropriés.

La bague externe 58b est en outre conformée pour conférer une certaine souplesse au palier 58. Dans l'exemple représenté, une de ses extrémités axiales, ici amont, a en section axiale une forme en C ou épingle qui autorise par déformation une souplesse radiale de la bague 58b.

Le palier 56 est situé sur une circonférence C3 qui a un diamètre supérieur à la circonférence C4 où est situé le palier 58.

L'invention propose ainsi une turbomachine à turbines contra-rotatives et à réducteur avec un positionnement de paliers permettant de résoudre les problématiques de dynamique, de consommations de jeux sous manoeuvre et de désalignements, tout en proposant une meilleure intégrabilité mécanique des différents composants.

L'invention permet de résoudre ou d'éviter plusieurs problèmes de la technique antérieure, parmi lesquels :
- une solution consistant à guider chacun des arbres par un seul palier n'est pas satisfaisante pour les raisons suivantes :
- le réducteur n'est pas ou est peu sujet à des désalignements importants, que ce soit sous gravitaire, manoeuvre ou dynamique. Cela aurait pour effet de créer des surcharges dans les dentures d'engrènement, ce qui serait pénalisant pour le dimensionnement du réducteur (mécanique, masse) ;
- le réducteur peut être installé dans un environnement relativement souple (souplesses intégrées au sein du porte-satellites et de l'arbre d'entrée, afin de permettre au réducteur d'accommoder les déplacements de celui-ci pour ne pas surcharger les dentures). Cela nécessiterait un encombrement qui pourrait être pénalisant pour la longueur moteur ;
- le rotor rapide n'est pas maintenu par un seul palier, ce qui pourrait poser des problèmes de centrage de celui-ci lors du montage ; cela pourrait aussi engendrer des consommations importantes de jeux inter-turbines sous manoeuvre, ce qui aurait pour effet, là encore, de dégrader les performances de cette architecture ;
- etc.

## Revendications

1. Turbomachine (10) à turbine contrarotative pour un aéronef,
la turbomachine comportant une turbine contrarotative (22) dont un premier rotor (22a) est configuré pour tourner dans un premier sens de rotation et est relié à un premier arbre de turbine (36), et un second rotor (22b) est configuré pour tourner dans un sens opposé de rotation et est relié à un second arbre de turbine (38), le premier rotor comportant des roues de turbine intercalées entre des roues de turbine du second rotor,
la turbomachine comprenant en outre un réducteur mécanique (42) à train épicycloïdal de type planétaire qui comporte un solaire (44) entraîné en rotation par ledit second arbre (38), une couronne (40) entraînée en rotation par ledit premier arbre (36), et un porte-satellites (46) fixé à un premier carter de stator (26) de la turbomachine situé en amont de la turbine contrarotative par rapport à une direction d'écoulement des gaz dans la turbomachine,
la turbomachine comprenant des paliers (56-62) de guidage des premier et second arbres,
ledit second arbre (38) est guidé par au moins deux paliers de guidage (56, 58) montés entre ce second arbre et ledit premier carter de stator ou un élément relié à ce dernier,
**caractérisée en ce que** ledit premier arbre (36) est guidé par au moins deux paliers de guidage (60, 62) montés entre ce premier arbre et un second carter de stator (28) situé en aval de la turbine contrarotative ou un élément relié à ce dernier.

2. Turbomachine (10) selon la revendication 1, dans laquelle ledit second arbre (38) est guidé par seulement deux paliers de guidage (56, 58).

3. Turbomachine (10) selon la revendication 2, dans laquelle les deux paliers de guidage (56, 58) du second arbre (38) sont respectivement un palier à billes amont et un palier à rouleaux aval.

4. Turbomachine (10) selon la revendication 2 ou 3, dans laquelle l'un des deux paliers de guidage (56, 58) du second arbre (38), tel que le palier à rouleaux aval (58), est associé à un système (78) d'amortissement à compression de film d'huile.

5. Turbomachine (10) selon l'une des revendications 2 à 4, dans laquelle les deux paliers de guidage (56, 58) du second arbre (38) sont situés radialement à l'intérieur des premiers et seconds rotors (22a, 22b).

6. Turbomachine (10) selon l'une des revendications précédentes, dans laquelle ledit premier arbre (36) est guidé par seulement deux paliers de guidage (60, 62).

7. Turbomachine (10) selon la revendication 6, dans laquelle un premier palier de guidage (60) du premier arbre (36) est situé en amont du réducteur (42) et un second palier de guidage (62) du premier arbre est situé en aval du réducteur.

8. Turbomachine (10) selon la revendication 7, dans laquelle le premier palier de guidage (60) du premier arbre (36) est situé dans un premier plan (P1) perpendiculaire à un axe longitudinal de la turbomachine, qui passe en aval desdits premier et second rotors (22a, 22b), et en amont dudit réducteur (42) et dudit second carter (28), et ledit second palier de guidage (62) du premier arbre est situé dans un second plan (P2) perpendiculaire à cet axe, qui est situé en aval dudit réducteur et dudit second carter.

9. Turbomachine (10) selon l'une des revendications 6 à 8, dans laquelle les deux paliers de guidage (60, 62) du premier arbre (36) sont à rouleaux.

10. Turbomachine (10) selon la revendication 9, dans laquelle l'un (60) des deux paliers de guidage du premier arbre (36), tel qu'un palier amont, est associé à un système (70) d'amortissement à compression de film d'huile.

11. Turbomachine (10) selon l'une des revendications précédentes, dans laquelle ledit premier arbre (36) est relié à un étage aval dudit premier rotor (22a), et/ou ledit second arbre (38) est relié à un étage aval dudit second rotor (22).

12. Turbomachine (10) selon l'une des revendications précédentes, dans laquelle au moins un des paliers de guidage (60, 62) du premier arbre (36) est conformé pour avoir une certaine souplesse en direction radiale.

13. Turbomachine (10) selon la revendication précédente, dans laquelle la souplesse d'au moins un des paliers de guidage (60, 62) du premier arbre (36) est apportée par une portion annulaire à section en C d'une bague de ce palier.

14. Turbomachine (10) selon l'une des revendications précédentes, dans laquelle au moins un des paliers de guidage (56, 58) du second arbre (38) est conformé pour avoir une certaine souplesse en direction radiale.

15. Turbomachine (10) selon la revendication précédente, dans laquelle la souplesse d'au moins un des paliers de guidage (56, 58) du second arbre (38) est apportée par une portion annulaire à section en C d'une bague de ce palier.

16. Turbomachine (10) selon l'une des revendications précédentes, dans laquelle au moins un des éléments choisis parmi le porte-satellites (46) et un porte-couronne (40a) qui supporte la couronne (40), est conformé pour avoir une certaine souplesse radiale ainsi qu'une certaine souplesse en basculement.

17. Turbomachine (10) selon la revendication précédente, dans laquelle la souplesse dudit au moins un des éléments est apportée par une portion annulaire à section en C ou en S de cet élément.

18. Turbomachine (10) selon la revendication précédente, dans laquelle l'un des paliers de guidage (60) du premier arbre (36) est situé sur une circonférence (C1) qui a un diamètre supérieur à une circonférence (C2) passant par l'autre des paliers (62) de guidage de ce premier arbre (36), et qui est de préférence supérieur au diamètre externe du réducteur (42).

19. Turbomachine (10) selon la revendication précédente, dans laquelle les paliers de guidage (56, 58) du second arbre (38) sont situés sur des circonférences (C3, C4) de diamètres différentes, le palier (58) situé en aval étant situé sur la circonférence de plus petit diamètre qui peut être inférieur au diamètre interne du réducteur (42).

20. Turbomachine (10) selon l'une des revendications précédentes, dans laquelle ledit premier arbre (36) est relié à la couronne (40) du réducteur et à un arbre d'entraînement d'une soufflante (12) de la turbomachine.

21. Turbomachine (10) selon la revendication précédente, dans laquelle elle est du type à une unique soufflante (12) carénée, le premier arbre (36) entrainant en rotation cette unique soufflante.

## Patentansprüche

1. Turbomaschine mit gegenläufiger Turbine für ein Flugzeug, wobei die Turbomaschine eine gegenläufige Turbine (22) umfasst, bei der ein erster Rotor (22a) dazu konfiguriert ist, sich in eine erste Drehrichtung zu drehen und mit einer ersten Turbinenwelle (36) verbunden ist, und ein zweiter Rotor (22b) dazu konfiguriert ist, sich in eine entgegengesetzte Drehrichtung zu drehen und mit einer zweiten Turbinenwelle (38) verbunden ist, wobei der erste Rotor zwischen Turbinenrädern des zweiten Rotors eingefügte Turbinenräder umfasst,
wobei die Turbomaschine weiter ein mechanisches Untersetzungsgetriebe (42) mit epizyklischem Antrieb vom Planetentyp umfasst, das ein Sonnenrad (44) umfasst, das durch die zweite Welle (38) in Drehung versetzt wird, eine Krone (40), die durch die erste Welle (36) in Drehung versetzt wird, und einen Planetenträger (46), der an einem ersten Statorgehäuse (26) des Turbomaschines befestigt ist, in Bezug auf eine Gasströmungsrichtung im Turbomaschine stromaufwärts der gegenläufigen Turbine gelegen, wobei die Turbomaschine Führungslager (56-62) für die erste und zweite Welle umfasst, wobei die zweite Welle (38) von mindestens zwei Führungslagern (56, 58) geführt wird, die zwischen dieser zweiten Wellen und dem ersten Statorgehäuse oder einem mit diesem Letzteren verbundenen Element angebracht ist, **dadurch gekennzeichnet, dass** die erste Welle (36) von mindestens zwei Führungslagern (60, 62) geführt wird, die zwischen dieser ersten Welle und einem zweiten Statorgehäuse (28), das stromabwärts der gegenläufigen Turbine gelegen ist, oder an einem mit diesem Letzteren verbundenen Element angebracht sind.

2. Turbomaschine (10) nach Anspruch 1, wobei die zweite Welle (38) nur von zwei Führungslagern (56, 58) geführt wird.

3. Turbomaschine (10) nach Anspruch 2, wobei die zwei Führungslager (56, 58) der zweiten Welle (38) ein stromaufwärtiges Kugellager bzw. ein stromabwärtiges Walzlager sind.

4. Turbomaschine (10) nach Anspruch 2 oder 3, wobei das eine der zwei Führungslager (56, 58) der zweiten Welle (38), beispielsweise das stromabwärtige Walzlager (58), einem Ölfilm-Kompressionsdämpfungssystem (78) zugeordnet ist.

5. Turbomaschine (10) nach einem der Ansprüche 2 bis 4, wobei die zwei Führungslager (56, 58) der zweiten Welle (38) radial innerhalb des ersten und zweiten Rotors (22a, 22b) gelegen sind.

6. Turbomaschine (10) nach einem der vorstehenden Ansprüche, wobei die erste Welle (36) nur von zwei Führungslagern (60, 62) geführt wird.

7. Turbomaschine (10) nach Anspruch 6, wobei ein erstes Führungslager (60) der ersten Welle (36) stromaufwärts des Untersetzungsgetriebes (42) gelegen ist und ein zweites Führungslager (62) der ersten Welle stromabwärts des Untersetzungsgetriebes gelegen ist.

8. Turbomaschine (10) nach Anspruch 7, wobei das erste Führungslager (60) der ersten Welle (36) in einer ersten Ebene (P1) senkrecht zu einer Längsachse des Turbomaschines gelegen ist, die stromabwärts des ersten und zweiten Rotors (22a, 22b) und stromaufwärts des Untersetzungsgetriebes (42) und des zweiten Gehäusen (28) verläuft, und wobei das zweite Führungslager (62) der ersten Welle in einer zweiten Ebene (P2) senkrecht zu dieser Achse gelegen ist, die stromabwärts des Untersetzungsgetriebes und des zweiten Gehäuses gelegen ist.

9. Turbomaschine (10) nach einem der Ansprüche 6 bis 8, wobei die zwei Führungslager (60, 62) der ersten Welle (36) Walzen aufweisen.

10. Turbomaschine (10) nach Anspruch 9, wobei das eine (60) der zwei Führungslager der ersten Welle (36), beispielsweise ein stromaufwärtiges Lager, einem Ölfilm-Kompressionsdämpfungssystem (70) zugeordnet ist.

11. Turbomaschine (10) nach einem der vorstehenden Ansprüche, wobei die erste Welle (36) mit einer stromabwärtigen Stufe des ersten Rotors (22a) verbunden ist und/oder die zweite Welle (38) mit einer stromabwärtigen Stufe des zweiten Rotors (22) verbunden ist.

12. Turbomaschine (10) nach einem der vorstehenden Ansprüche, wobei mindestens eines der Führungslager (60, 62) der ersten Welle (36) dazu ausgelegt ist, eine gewisse Nachgiebigkeit in radialer Richtung aufzuweisen.

13. Turbomaschine (10) nach dem vorstehenden Anspruch, wobei die Nachgiebigkeit des mindestens einen der Führungslager (60, 62) der ersten Welle (36) durch einen ringförmigen Abschnitt mit C-förmigen Querschnitt eines Rings dieses Lagers erbracht wird.

14. Turbomaschine (10) nach einem der vorstehenden Ansprüche, wobei mindestens eines der Führungslager (56, 58) der zweiten Welle (38) dazu ausgelegt ist, eine gewisse Nachgiebigkeit in radialer Richtung aufzuweisen.

15. Turbomaschine (10) nach dem vorstehenden Anspruch, wobei die Nachgiebigkeit mindestens eines der Führungslager (56, 58) der zweiten Welle (38) durch einen ringförmigen Abschnitt mit C-förmigen Querschnitt eines Rings dieses Lagers erbracht wird.

16. Turbomaschine (10) nach einem der vorstehenden Ansprüche, wobei mindestens eines der Elemente, ausgewählt aus dem Planetenträger (46) und einem Kronenträger (40a), der die Krone (40) stützt, dazu ausgelegt ist, eine gewisse radiale Nachgiebigkeit sowie eine gewisse Nachgiebigkeit beim Kippen aufzuweisen.

17. Turbomaschine (10) nach dem vorstehenden Anspruch, wobei die Nachgiebigkeit des mindestens einen der Elemente durch einen ringförmigen Abschnitt mit C-förmigen oder S-förmigem Querschnitt dieses Elements erbracht wird.

18. Turbomaschine (10) nach dem vorstehenden Anspruch, wobei das eine der Führungslager (60) der ersten Welle (36) an einem Umfang (C1) gelegen ist, der einen Durchmesser aufweist, der größer ist als ein Umfang (C2), der durch das andere der Führungslager (62) dieser ersten Welle (36) verläuft, und der vorzugsweise größer ist als der Außendurchmesser des Untersetzungsgetriebes (42).

19. Turbomaschine (10) nach dem vorstehenden Anspruch, wobei die Führungslager (56, 58) der zweiten Welle (38) an Umfängen (C3, C4) mit unterschiedlichen Durchmessern gelegen sind, wobei das stromabwärts gelegene Lager auf dem Umfang mit dem kleineren Durchmesser gelegen ist, der kleiner als der Innendurchmesser des Untersetzungsgetriebes (42) sein kann.

20. Turbomaschine (10) nach einem der vorstehenden Ansprüche, wobei die erste Welle (36) mit der Krone (40) des Untersetzungsgetriebes und einer Antriebswelle eines Gebläses (12) dieses Turbomaschines verbunden ist.

21. Turbomaschine (10) nach dem vorstehenden Anspruch, wobei es vom Typ mit einem einzigen Mantelgebläse (12) ist, wobei die erste Welle (36) dieses einzige Gebläse in Drehung versetzt.

## Claims

1. A turbomachine (10) having a contrarotating turbine for an aircraft,
the turbomachine comprising a contrarotating turbine (22) of which a first rotor (22a) is configured to rotate in a first direction of rotation and is connected to a first turbine shaft (36), and a second rotor (22b) configured to rotate in an opposite direction of rotation and connected to a second turbine shaft (38), the first rotor comprising turbine wheels interleaved between turbine wheels of the second rotor,
the turbomachine further comprising a planetary-type epicyclic mechanical reduction gear (42) which comprises a sun gear (44) driven in rotation by said second shaft (38), a ring gear (40) driven in rotation by said first shaft (36), and a planet carrier (46) attached to a first stator casing (26) of the turbomachine located upstream of the contrarotating turbine with respect to a direction of flow of gas in the turbomachine,
the turbomachine comprising bearings (56-62) for guiding the first and second shafts, said second shaft (38) is guided by at least two guide bearings (56, 58) mounted between this second shaft and said first stator casing or an element connected to the latter,
**characterised in that** said first shaft (36) is guided by at least two guide bearings (60, 62) mounted between this first shaft and a second stator casing (28) located downstream of the contrarotating turbine or an element connected to the latter.

2. The turbomachine (10) according to claim 1, wherein said second shaft (38) is guided by only two guide bearings (56, 58).

3. The turbomachine (10) according to claim 2, wherein the two guide bearings (56, 58) of the second shaft (38) are an upstream ball bearing and a downstream roller bearing respectively.

4. The turbomachine (10) according to claim 2 or 3, wherein one of the two guide bearings (56, 58) of the second shaft (38), such as the downstream roller bearing (58), is associated with an oil film compression damping system (78).

5. The turbomachine (10) according to one of claims 2 to 4, wherein the two guide bearings (56, 58) of the second shaft (38) are located radially inside the first and second rotors (22a, 22b).

6. The turbomachine (10) according to one of the preceding claims, wherein said first shaft (36) is guided by only two guide bearings (60, 62).

7. The turbomachine (10) according to claim 6, wherein a first guide bearing (60) of the first shaft (36) is located upstream of the reduction gear (42) and a second guide bearing (62) of the first shaft is located downstream of the reduction gear.

8. The turbomachine (10) according to claim 7, wherein the first guide bearing (60) of the first shaft (36) is located in a first plane (P1) perpendicular to a longitudinal axis of the turbomachine, which passes downstream of said first and second rotors (22a, 22b), and upstream of said reduction gear (42) and said second casing (28), and said second guide bearing (62) of the first shaft is located in a second plane (P2) perpendicular to this axis, which is located downstream of said reduction gear and said second casing.

9. The turbomachine (10) according to one of claims 6 to 8, wherein both guide bearings (60, 62) of the first shaft (36) are roller bearings.

10. The turbomachine (10) according to claim 9, wherein one (60) of the two guide bearings of the first shaft (36), such as an upstream bearing, is associated with an oil film compression damping system (70).

11. The turbomachine (10) according to any of the preceding claims, wherein said first shaft (36) is connected to a downstream stage of said first rotor (22a), and/or said second shaft (38) is connected to a downstream stage of said second rotor (22).

12. The turbomachine (10) according to one of the preceding claims, wherein at least one of the guide bearings (60, 62) of the first shaft (36) is shaped to have some flexibility in radial direction.

13. The turbomachine (10) according to the preceding claim, wherein the flexibility of at least one of the guide bearings (60, 62) of the first shaft (36) is provided by an annular portion having a C-shaped cross-section of a ring of that bearing.

14. The turbomachine (10) according to one of the preceding claims, wherein at least one of the guide bearings (56, 58) of the second shaft (38) is shaped to have some flexibility in a radial direction.

15. The turbomachine (10) according to the preceding claims, wherein the flexibility of at least one of the guide bearings (56, 58) of the second shaft (38) is provided by an annular portion having a C-shaped cross-section of a ring of that bearing.

16. The turbomachine (10) according to one of the preceding claims, wherein at least one of the planet carrier (46) and a ring gear carrier (40a) which supports the ring gear (40) is shaped to have some radial flexibility as well as tilting flexibility.

17. The turbomachine (10) according to the preceding claim, wherein the flexibility of said at least one of the elements is provided by an annular portion having a C- or S-shaped cross-section of that element.

18. The turbomachine (10) according to the preceding claim, wherein one of the guide bearings (60) of the first shaft (36) is located on a circumference (C1) which has a diameter greater than a circumference (C2) passing through the other of the guide bearings (62) of that first shaft (36), and which is preferably greater than the outer diameter of the reduction gear (42).

19. The turbomachine (10) according to the preceding claim, wherein the guide bearings (56, 58) of the second shaft (38) are located on circumferences (C3, C4) of different diameters, the downstream bearing (58) being located on the circumference of smaller diameter which may be smaller than the inner diameter of the reduction gear (42).

20. The turbomachine (10) according to one of the preceding claims, wherein said first shaft (36) is connected to the ring gear (40) of the reduction gear and to a drive shaft of a fan (12) of the turbomachine.

21. The turbomachine (10) according to the preceding claim, wherein it is of the type with a single ducted fan (12), the first shaft (36) driving this single fan in rotation.
